# EUROPEAN PATENT APPLICATION

(11) **EP 1 278 143 A1**
(43) Date of publication of application: **22.01.2003**
(21) Application number: 01912417.1
(22) Date of filing: 15.03.2001
(51) Int. Cl.: G06F 17/60, H04M 1/66, H04M 1/675

(54) **EXTERNAL DEVICE AND AUTHENTICATION SYSTEM**

(30) Priority: 24.04.2000 JP 2000163729
(71) Applicant: Neotechkno Corporation, Nagoya-shi, Aichi 451-0021 (JP)
(72) Inventor: TAKEUCHI, Masaki, Neotechkno Corporation, Nagoya-shi, Aichi 451-0021 (JP)
(74) Representative: Roth, Klaus
(86) International application number: JP0102084
(87) International publication number: WO01082151

(57) **Abstract**

When a user 1 applies for a service via a portable phone device 4a to which an external device 4b is connected, an authentication reception server 3 transmits a notice of authentication receipt to the portable phone device 4a. The external device 4b, in response to this notice, transmits authentication information via the portable phone device 4a. When the authentication reception server 3 determines that the authentication information is correct, it requests a key issuance server 5 to issue an access key. The key issuance server 5 issues a common access key to the portable phone device 4a and the service provision server 2. The external device 4b transmits this access key to a service provision server 2 via the portable phone device 4a to apply for the service. The service provision server 2 provides the service to the user 1 who transmits the common access key issued by the aforementioned server 5. Accordingly, it is possible to simplify steps of authentication and also restrain unauthorized access by performing reliable authentication.

## Description

### FIELD OF THE INVENTION

The present invention relates to an authentication system, and a user terminal device to be used therewith.

### BACKGROUND OF THE INVENTION

Heretofore, there have been authentication systems used for authentication of users before they access some services. For example, upon getting connected to the Internet, users generally go through the authentication by submitting their user ID and password.

Information such as user ID and password, however, must be entered by the users themselves for authentication, and the password must be kept in secret for prevention of unauthorized access by others.

### SUMMARY OF THE INVENTION

Wherefore, an object of the present invention is, while providing simplified steps of authentication to users, to prevent unauthorized access by performing reliable authentication.

This and other objects are accomplished with an external device as set forth in claim 1, which is detachably connected to a portable phone device. The external device processes and stores information necessary for authentication, gives instructions to the portable phone device to communicate, responds to instructions from the portable phone device, starts to operate according to the instructions, and cooperates with the portable phone device in accordance with the access state. This external device is used with an authentication system characterized by performing authentication of the external device and the user.

The external device of claim 1, under the condition that the same is connected to the portable phone device, automatically responds to a call from a certain authentication reception server, for example, and automatically transmits information for identifying the external device to the given authentication reception server, among information necessary for authentication stored in the external device itself. The above operations are automatically performed by the external device, and the authentication is performed through the identification of the external device.

More particularly, it is preferable that the external device is configured as described in claim 2.

An external device of claim 2 is detachably connected to a phone device having a calling function and stores authentication information. Under the condition that the external device is connected to the phone device, the external device responds to instructions from the authentication reception server, and gives instructions to the phone device to communicate with the authentication reception server to transmit the authentication information. In accordance with the instructions, the authentication information to be used for authentication of the user who requests a service such as supply of information, sales of goods and services, etc. is transmitted through the phone device. This authentication information is then determined by the authentication reception server whether it is correct or not.

Accordingly, the external device of claim 2 gives instructions to the phone device to communicate to transmit the authentication information in response to the instructions from the authentication reception server, thus realizing a highly secure authentication. In other words, if the external device merely makes the phone device transmit the authentication information regardless of the instructions from the authentication reception server, the external device can transmit the authentication information at any given time. Therefore, it is possible, for example, that someone inputs and transmits forged authentication information without using the external device. Contrary, if the external device has the phone device transmit the authentication information in response to the instructions from the authentication reception server, the authentication reception server can set certain conditions on transmission of the authentication information.

For example, the authentication reception server can request complex calculation or encryption to be conducted to given data to receive the outcome as authentication information, or set a period of time between transmission of the instructions and receipt of the authentication information as short as possible, so that an input operation by a human within the period is impossible. In other words, the external device in the present invention prevents unauthorized access by adapting the authentication reception server to demand information hardly unpredictable or conditions hardly practicable for those who intend to pass the authentication illegally. Furthermore, while such high level authentication is realized, the present external device can be convenient for the user since the user is free from input of a complex password as well as safekeeping of the password.

In the present invention, the phone device having a calling function includes, for example, a personal computer provided with a modem, in addition to the phone device for use in ordinary calls. In short, the phone device is a device that can establish communication via phone lines. Among such phone devices, portable phone devices are especially convenient.

The external device as set forth in claim 3 is designed to be connected to a portable phone device which can be communicated by radio. Accordingly, since it is possible for the user to always carry the portable phone device and the external device and there is less restriction of when or where to access the service, the user can utilize the service much conveniently.

In an external device as set forth in claim 4, a user who applies for a service such as supply of information, sales of goods and services, etc. requests authentication by transmitting authentication information via a phone device having a calling function and an external device. In other words, the phone device transmits the authentication information, under the condition that the external device connected to the phone device gives instructions to the phone device to communicate to transmit the stored authentication information. The authentication reception server receives the information and then determines whether or not it is correct. According to a result of this determination, the service provision server may provide the service to the user.

The authentication system of claim 4 dispenses with user input of a complicated password for authentication and safekeeping of the password, and thus it is convenient for the user. Moreover, since it provides the service based on the result of determination of authentication information, unauthorized access can be prevented.

In an authentication system as set forth in claim 5, a user who applies for a service such as supply of information, sales of goods and services, etc, requests authentication by transmitting authentication information via a phone device having a calling function and an external device. In other words, the phone device transmits the authentication information, under the condition that the external device connected to the phone device gives instructions to the phone device to communicate to transmit the stored authentication information. The authentication reception server, when it receives this information and determines that the information is correct, requests the key issuance server to issue an access key. The key issuance server, in response to the request from the authentication reception server, issues an access key to the phone device, which is connected to the external device and possessed by the aforesaid user, and the service provision server. The service provision server, when the user applies for the service with the access key from the phone device to which the external device possessed by the user is connected, provides the service to the user.

In other words, when the external device detects the issuance of the access key to the phone device from the key issuance server, it makes the phone device to transmit this access key to the service provision server. When the service provision server receives the access key transmitted from the phone device, it compares the key with the access key received from the key issuance server, and, when they agree, transmits information for providing the service to the user to the phone device.

The authentication system of claim 5 dispenses with user input of a complicated password for authentication and safekeeping of the password, and thus it is convenient for the user. Moreover, since the key issuance server issues the access key to both the phone device and the service provision server, highly secure authentication can be performed. In other words, the service provision server performs authentication of the phone device which transmits the access key, by confirming that the access keys issued from the key issuance server to both parties agree. Therefore, there is no need for the key issuance server to issue the access key in a predetermined form but the access key created every time there is a request of access at its discretion (for example, one time key usable for just one time). Thus, it is possible to complicate unauthorized access by others by means of forgery of the access key.

It is preferable that the key issuance server, when issuing the access key to the service provision server, sends the information (information which can identify the user such as the authentication information, ID, etc.) relating to the external device connected to the phone device to which the key issuance server issues the same access key. Then, the service provision server, when the user (in particular, from the user's phone device and external device) possessing the access key applies for the service, can determine whether the user is actually the one to whom the access key was issued. In case that the access key agrees but the user information disagrees, the service provision server determines that there is a possibility of unauthorized access by a stolen access key, and rejects providing the service to the user.

It is preferable that the service provision server rejects providing the service in case that no application is made by the user within a predetermined period of time after the issuance of the access key from the key issuance server. Then, unauthorized access by a stolen access key and forged user information can be prevented.

All of the aforementioned servers can be gathered and controlled in one computer. By controlling these servers together, a highly secure authentication system can be provided. Otherwise, the servers can be divided and installed depending on their roles. In this case, easy assignment of authentication tasks to the respective servers playing different roles can be achieved, access concentration to one server can be dissolved, and multiplexing of the intensively accessed server becomes easy.

This highly secure authentication system can be used for electronic commerce.

The authentication system as set forth in claim 6 further includes a fee management server for payment of a fee for the service provided by the service provision server. By including the fee management server and cooperating with the same, it is possible to collect a certain amount of money beforehand and control provision of the service according to the balance. It is also possible to set a maximum available sum, and provide the service until the total fee reaches the sum.

According to the authentication system of claim 6, the external device for authentication can be used as a wallet for electronic money. Credit accounting can be used in higher security than a credit card with embedded IC chip. Secure provision of service to users who use the Internet and phone lines can be possible.

The authentication system as set forth in claim 7 comprises a fee management server for collecting a service fee from a user who receives the service provided by the service provision server. In this case, the fee can be collected in various manners. For example, the collection can be conducted by setting a credit limit to the user based on information such as a balance of the bank account and a balance of the limit of credit card use of the user, providing the service within the credit limit and later collecting the fee. Otherwise, the fee can be collected by providing the service according to a balance of an advance (i.e. prepaid money) collected beforehand from the user.

In the authentication system of claim 7, the fee management server, before the service provision server provides the service to the user, further checks a balance collectable as the service fee from the user. With this check, it is possible that the service provision server rejects providing the service, because there is no or less collectable balance, for example, and it is considered inappropriate to provide the service to the user. Since the check for a collectable balance is completed before the provision of the service, inconvenience such that, in an auction service, for example, a transaction is failed after determination of a successful bidder, for the bidder is found unable to complete the payment, can be avoided.

In the authentication system as set forth in claim 8, the external device is designed to be connected to a POS register (Point-Of-Sale register) connected to the authentication reception server and the fee management server via transmission lines. The POS register transmits authentication information stored in the external device and price information inputted from an external source. Then, the authentication reception server receives the authentication information transmitted from the POS register and determines whether or not the authentication information is correct. The fee management server, when it is determined that the authentication information is correct by the authentication reception server, performs a process for collecting the fee from the user identified by the authentication information, based on the price information transmitted from the POS register.

For example, when the user purchases goods in a store, the external device possessed by the user can be inserted to the POS register provided in the store for connection. Under this condition, a store keeper inputs a price of the goods into the POS register. Then the price information instructing to collect the amount and the authentication information of the external device are transmitted. When the authentication reception server determines that the authentication information is correct, the fee management server performs a process for collecting the fee from the user according to the price information.

As above explained, connecting the external device with the POS register in the store enables payment from a bank account, credit card and prepaid money.

In the authentication system as set forth in claim 9, the external device generates authentication information by combining an ID specific to the external device and at least one of the following information: a code changing with the access state, a phone number and a serial number of the phone device previously used, and a phone number and a serial number of the phone device currently connected.

In short, the authentication information is generated by incorporating additional information with the ID. The authentication reception server stores this additional information beforehand and performs authentication of the received authentication information based on the additional information.

As a particular example, a case in that the external device incorporates a code changing with the access state (here, it is an application frequency for the service) as the additional information is described. In this case, the external device generates the authentication information by combining the ID and the application frequency. The authentication reception server stores the application frequency of the ID beforehand, and, when receiving the authentication information, performs authentication by comparing the application frequency obtained from the authentication information received and the application frequency stored in the server. The authentication reception server stores the application frequency of the ID, by increasing the application frequency of the ID every time the application from the external device is made. Generation of authentication information incorporating a code changing with the access state as additional information disallows the authentication information to be a fixed value. Therefore, it is possible to complicate forgery of the authentication information by others. Similar authentication can be performed in a case of incorporating the phone number and the serial number of the phone device previously used as additional information.

Accordingly, this system complicates development of a pseudo device of the present external device which unpredictably operates for those who attempt unauthorized access through the access method to the authentication reception server. Even if a complete duplicate can be created by combination of the stored information which changes with the access state, authentication for only one of the original and the duplicate is successful. Therefore, duplication of the external device, creation of a pseudo device, or reconfiguration of the stored information is de facto impossible. Even if a complete duplicate is authenticated, this causes the original to be failed in the authentication. Therefore, since unauthorized access is detected when the original is used, the provision of the service is stopped to both devices thereafter and the unauthorized access is avoided.

On the other hand, in case of incorporating the phone number and the serial number of the phone device currently connected, the authentication reception server stores the phone number and the serial number as fixed values beforehand, for example. The authentication reception server performs authentication by comparing the stored information and the phone number and the serial number obtained from the authentication information to determine whether they agree. Such an authentication manner can limit the available phone device for the external device to only one phone device. Accordingly, even if the external device falls into the wrong hands by theft or loss, the authentication of the external device connected to the other phone device is not successful, thus damage to the user is prevented.

The authentication system of claim 9 can be paraphrased, according to the aforementioned subject matter, as the authentication system as set forth in any one of claims 4-8, in which the external device stores an ID specific to the device itself, and is designed to generate authentication information by incorporating information of any one of the following: a code changing with the access state; a phone number or serial number of the phone device previously used; and a phone number or serial number of the phone device currently connected, as additional information, with the ID. And the authentication reception server performs authentication, by receiving the authentication information and comparing the additional information with information corresponding to the additional information stored in the authentication reception server.

In the authentication system as set forth in claim 10, the external device changes a recipient of a call from the phone device. For example, a plurality of recipients of the phone device, that is, application reception servers exclusively used to receive information transmitted by the phone device first are provided. The external device, when instructing the phone device to communicate to transmit the information, selects one of the application reception server and instructs the phone device to transmit the information to the selected application reception server. In this manner, improvement in security level is attained.

The external device instructs the phone device to transmit the information to the application reception server selected in accordance with a predetermined rule, and the application reception server which receives the information forwards the information to the authentication reception server. The authentication reception server stores the same predetermined rule as that of the external device, and determines whether the application reception server through which the received information is passed is selected in accordance with the predetermined rule. If it is not selected in accordance with the predetermined rule, the authentication reception server rejects authentication. In this manner, even if completely forged authentication information is transmitted, it is possible to determine that unauthorized access is made if the information is passed through a wrong path.

The authentication system of claim 10 can be paraphrased, according to the aforementioned subject matter, as the authentication system as set forth in any one of claims 4-8, in which a plurality of application reception servers are provided for receiving information transmitted from the phone device first by instructions from the external device and forwarding the information to the authentication reception server. The external device, in accordance with a predetermined rule, selects one of the application reception servers, and instructs the phone device to transmit the information to the selected application reception server. The authentication reception server, when receiving the information, determines whether the application reception server through which the information is passed is selected in accordance with the predetermined rule. The service provision server is characterized in that it provides the service based on a result of the determination by the authentication reception server.

In this manner, a high secure authentication system which dispenses with complicated operations can be realized. However, there is an unfavorable case that the external device can be easily operated by others.

In the authentication system as set forth in claim 11, the external device starts to operate only when it determines that a code number inputted by the user operation is the same with a code number stored in the device. In this manner, others cannot use the external device with ease. In other words, the external device fails to perform any operation such as transmission of authentication information unless the same code number as the code number stored in the external device is entered by the user. Accordingly, in case that the external device falls into the wrong hands by theft, loss, etc., unauthorized access by others can be prevented since the external device fails to operate unless the correct code number is inputted.

Input of the code number may be performed by pushing operation buttons of the phone device, for example, and the external device detects the input information from the phone device. The code number stored in the external device may be set when the user uses the external device at the first time, for example. Thereafter, only the input of the same number as the code number can make the external device start. Otherwise, the code number stored in the external device may be a predetermined number. For example, a phone number of the phone device used or the serial number may be used as the code number. If the external device is designed to read the phone number or the serial number from the phone device by connecting the external device to the phone device, only connecting the external device to the phone device can have the same effect as the input of the code number.

In the authentication system as set forth in claim 12, number information (the ID or the corresponding information, for example) specific to the external device is displayed on the device. This number information can be displayed in characters like numbers and alphabets, or in barcode. Such display of the number information can realize various services. For example, readers which can scan the number information and are connected to the authentication reception server or the service provision server via transmission lines are provided in each store. The readers are, for example, barcode scanners connected to terminals such as POS registers or optical character readers. When the user presents the external device to a store keeper of each store, the store keeper has the reader scan the number information and transmits the information with additional necessary information to the authentication reception server or the service provision server. Such a system enables the store to use the external device as a point card which counts the user visits to the store, or to offer benefits to the user of the presented external device.

In the authentication system as set forth in claim 13, the external device has the phone device transmit the information of the phone number of the phone device connected to the external device, along with the authentication information or in the form included in the authentication information. The authentication reception server, when it determines that there is no information of the phone number in the information from the phone device connected to the external device, rejects authentication. In other words, the authentication reception server is designed to reject authentication, if it determines that no information of the phone number is included when it receives the authentication information.

Accordingly, the authentication system of claim 13 necessitates transmission of the phone number for authentication of the external device. Therefore, those who attempt unauthorized access are not authenticated unless they transmit information of their phone number. Therefore, cheating can be avoided. Moreover, if they continue to attempt cheating, the system can reject receipt of their call and prevents interference to the whole system.

In the authentication system as set forth in claim 14, the phone device connected to the external device is a portable phone device which can be communicated by radio. Accordingly, the user can carry the portable phone device and the external device, and enjoy the services at any time anywhere.

In the authentication system as set forth in claim 15, instead of the phone device, a device is used which has no calling function but can be connected to the authentication reception server via transmission lines, in the authentication system of the aforementioned claims 4-8, 10-13. According to this authentication system, it is possible to enjoy services via a device except for the phone device.

### BRIEF DESCRIPTION OF THE DRAWINGS

Fig. 1 is a block diagram showing an internal structure of an external device of the present embodiment;
Fig. 2 is a explanatory diagram illustrating authentication steps of an authentication system of the present embodiment;
Fig. 3 is a explanatory diagram illustrating the authentication steps of the authentication system of the present embodiment, to which a fee management server is included;
Fig. 4 is a schematic structural diagram of the authentication system of the present embodiment;
Fig. 5 is a flowchart showing a control process performed by the external device;
Fig. 6 is a flowchart showing a control process performed by an authentication reception server;
Fig. 7 is a flowchart showing a control process performed by the fee management server;
Fig. 8 is a flowchart showing a control process performed by a key issuance server;
Fig. 9 is a flowchart showing a control process performed by a service provision server;
Fig. 10 is an explanatory diagram illustrating tables used in an authentication information generation process performed by the external device;
Fig. 11 is an explanatory diagram illustrating the authentication information generation process performed by the external device;
Fig. 12 is an explanatory diagram illustrating a service used with a POS register; and
Fig. 13 is an explanatory diagram illustrating an authentication system provided with an application reception server.

### DESCRIPTION OF THE PREFERRED EMBODIMENT

An authentication system of an embodiment according to the present invention will be described below with reference to the accompanying drawings.

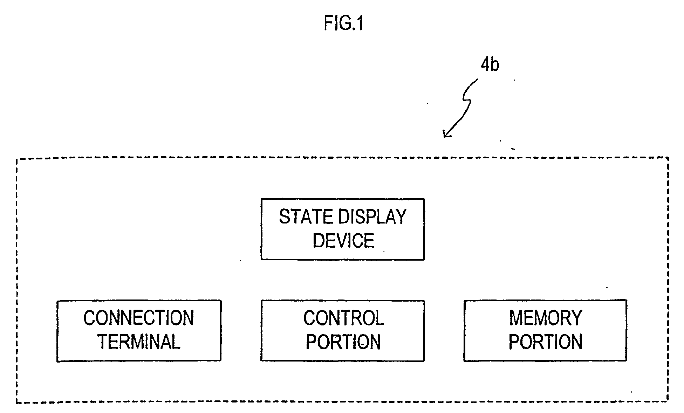

Fig. 1 is a block diagram showing an internal structure of an external device 4b which is used to be connected to a portable phone device 4a. The external device 4b comprises a state display device portion, a connection terminal portion, a control portion and a memory portion.

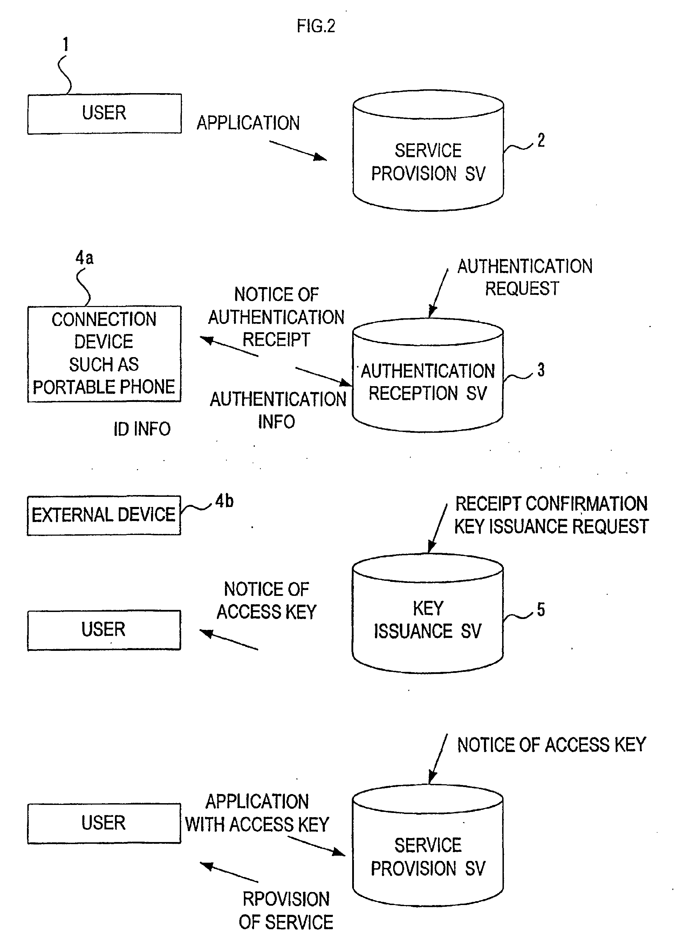

Authentication steps of the authentication system of the present embodiment are now explained. Fig. 2 is an explanatory diagram illustrating the authentication steps of the authentication system. In Fig. 2, a service user 1 applies for a service to a service provision server 2 via the portable phone device 4a and the external device 4b. The service provision server 2 requests an authentication reception server 3 to authenticate the service user 1. At this moment, a connection between the service user 1 and the service provision server 2 is temporarily cut off. The authentication reception server 3 transmits a notice of authentication receipt to the service user 1. The service user 1 transmits authentication information to the authentication reception server 3 via the portable phone device 4a and the external device 4b. If the authentication information is correct, the authentication reception server 3 requests a key issuance server 5 to issue an access key. The key issuance server 5 transmits the access key to the service user 1 and the service provision server 2. The connection between the service user 1 and the service provision server 2 are then recovered. At this moment, a cipher comprised of the transaction particulars and access state is generated and stored, and the same will be utilized for upgrading security at the next opportunity to be accessed.

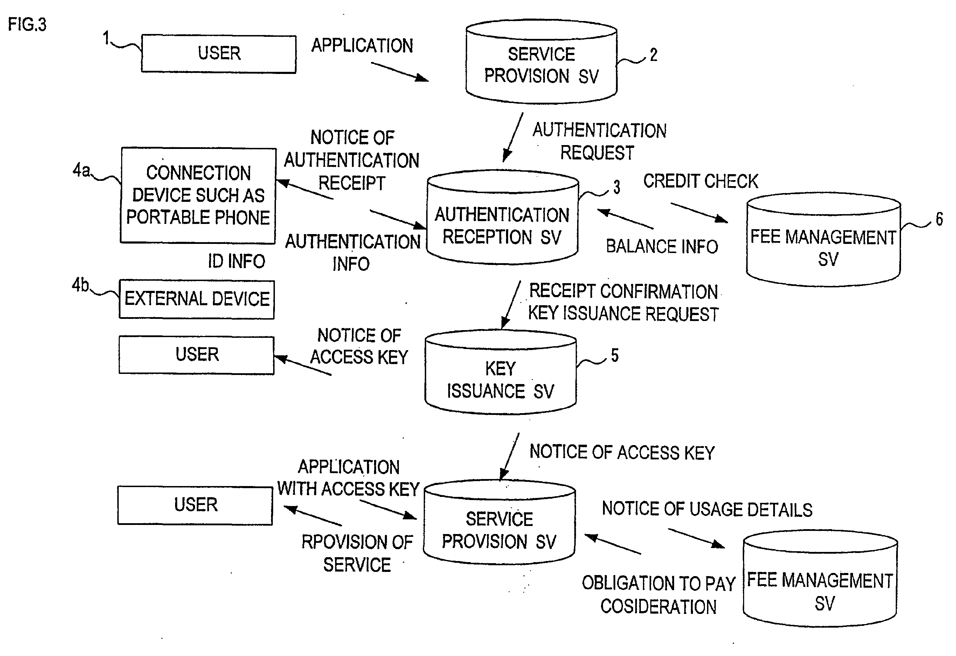

A constitution of the authentication system including a fee management server 6 is now explained. Fig. 3 is an explanatory diagram describing the authentication steps of the authentication system of Fig. 2. In this case, however, the system also includes the fee management server 6. In Fig. 3, the service user 1 applies for the service to the service provision server 2. The service provision server 2 requests the authentication reception server 3 to authenticate the service user 1. The authentication reception server 3 transmits a notice of authentication receipt to the service user 1 and requests the fee management server 6 to check a credit situation of the service user 1. If the authentication information is correct, the authentication reception server 3 requests the key issuance server 5 to issue an access key, and the key issuance server 5 transmits the access key to the service user 1 and the service provision server 2. The service user 1 can now apply for the service with the access key. The service user 1 is again connected to the service provision server 2, and the service provision server 2 starts to provide the service. The service provision server 2 demands payment for the service from the fee management server 6, and the fee management server 6 makes the payment. At this moment a cipher comprised of the transaction particulars and access state is generated and stored, and the same will be utilized for upgrading security at the next opportunity to be accessed.

Further details of the authentication system of the above-described embodiment are explained hereinafter.

As shown in Fig. 1, the external device 4b comprises the connection terminal portion for making an electric contact and communicating with an external terminal of the portable phone device 4a under the condition that the external device 4b is connected to the portable phone device 4a, the state display device portion for displaying the state of the device to the user 1 by lighting, blinking, etc. of an LED, the memory portion comprised of a flash memory for storing information necessary for authentication, and the control portion for controlling the aforementioned portions. The external device 4b is also provided with, but not shown in the figure, a battery as a power source and a power switch which is automatically turned on as the external device 4b is connected to the portable phone device 4a.

The authentication steps of the authentication system shown in Fig. 2 is now explained. This authentication system comprises the service provision server 2 for providing a service such as supply of information, sales of goods and services, etc., the portable phone device 4a possessed by the user 1 who intends to apply for the service and the external device 4b connected thereto, the authentication reception server 3 for authenticating the user 1, and the key issuance server for issuing an access key which will be a key to receive the service.

The user 1 who intends to apply for the service transmits information for service application to the service provision server 2 via the portable phone device 4a to which the external device 4b is connected. The service provision server 2, which receives this application, forwards the information for service application received from the portable phone device 4a to the authentication reception server 3, and requests authentication of the user 1.

The authentication reception server 3 which is requested to authenticate the user 1 transmits a notice of authentication receipt to the portable phone device 4a of the user 1. This notice is for instructing the user 1 to send authentication information to the authentication reception server 3 from the external device 4b. The external device 4b, in response to this instruction, transmits the authentication information to the authentication reception server 3 via the portable phone device 4a.

When the authentication reception server 3 receives this authentication information, it authenticates the user 1 based on the authentication information. As a result of the authentication, when the authentication reception server 3 determines that the authentication information is not correct, the authentication is failed. On the other hand, if the authentication reception server 3 determines that the authentication information is correct, it requests the key issuance server 5 to issue an access key.

The key issuance server 5, in response to the issuance request, issues a common access key to both the portable phone device 4a and the service provision server 2. When the external device 4b detects issuance of the access key to the portable phone device 4a, it transmits the access key to the service provision server 2 via the portable phone device 4a to apply for the service. The service provision server 2 provides the service to the user 1 who applies for the service with the same access key with the access key issued to itself from the key issuance server 5. In short, the service provision server 2 provides the service to the user 1 based on the result of authentication information check performed by the authentication reception server 3.

The authentication steps shown in Fig. 3 are described in the following. The same authentication system with the aforementioned authentication system (Fig. 2) is used but it includes the fee management server 6 for collecting a fee from the user 1 who receives the service.

The user 1 who intends to apply for the service transmits information for a service application to the service provision server 2 via the portable phone device 4a to which the external device 4b is connected. The service provision server 2 which receives this application forwards the information for service application received from the portable phone device 4a to the authentication reception server 3, and requests authentication of the user 1.

The authentication reception server 3 which is requested to authenticate the user 1 transmits a notice of authentication receipt to the portable phone device 4a. This notice is for instructing the external device 4b to send authentication information of the user 1 to the authentication reception server 3. The external device 4b, in response to the instruction, transmits the authentication information to the authentication reception server 3 via the portable phone device 4a.

When the authentication reception server 3 receives the authentication information, it authenticates the user 1 based on the authentication information. As a result of the authentication, if the authentication reception server 3 determines that the authentication information is not correct, the authentication is failed.

On the other hand, if the authentication reception server 3 determines that the authentication information is correct, it requests the fee management server 6 to check a credit situation of the user 1.

When the fee management server 6 is requested to check the credit situation by the authentication reception server 3, it checks a collectable balance of the user 1 account from which the service fee is collected, and transmits the information to the authentication reception server 3.

The authentication reception server 3 determines whether it is proper to provide the service to the user 1, based on the information of the collectable balance received from the fee management server 6. If the authentication reception server 3 determines that the user 1 is not suitable for receiving the service, the authentication is failed. On the other hand, if the authentication reception server 3 determines that the user 1 is suitable for receiving the service, it requests the key issuance server 5 to issue an access key.

The key issuance server 5, in response to the request for issuance, issues a common access key to the portable phone device 4a and the service provision server 2. When the external device 4b detects issuance of the access key by the key issuance server 5 to the portable phone device 4a, it applies for the service via the portable phone device 4a by transmitting the access key to the service provision server 2. The service provision server 2 provides the service to the user 1, who applied for the service with the same access key with the access key issued to itself from the key issuance server 5. In short, the service provision server 2 provides the service to the user 1 based on a result of an authentication information check by the authentication reception server 3 and a result of a collectable balance check by the authentication reception server 3.

The service provision server 2, when the service requires payment of a service fee, transmits a notice of usage details of the user 1 to the fee management server 6 and demands payment for the service. The fee management server 6, in response to the demand, performs a process for collecting the service fee from the user 1. The fee management server 6 also performs a process of paying the service fee (consideration) to the service provision server 2.

The authentication system shown in Fig. 3 is different from the authentication system in Fig. 2 only in that it includes the fee management server 6. Further details of the authentication system in Fig. 3 are described hereafter.

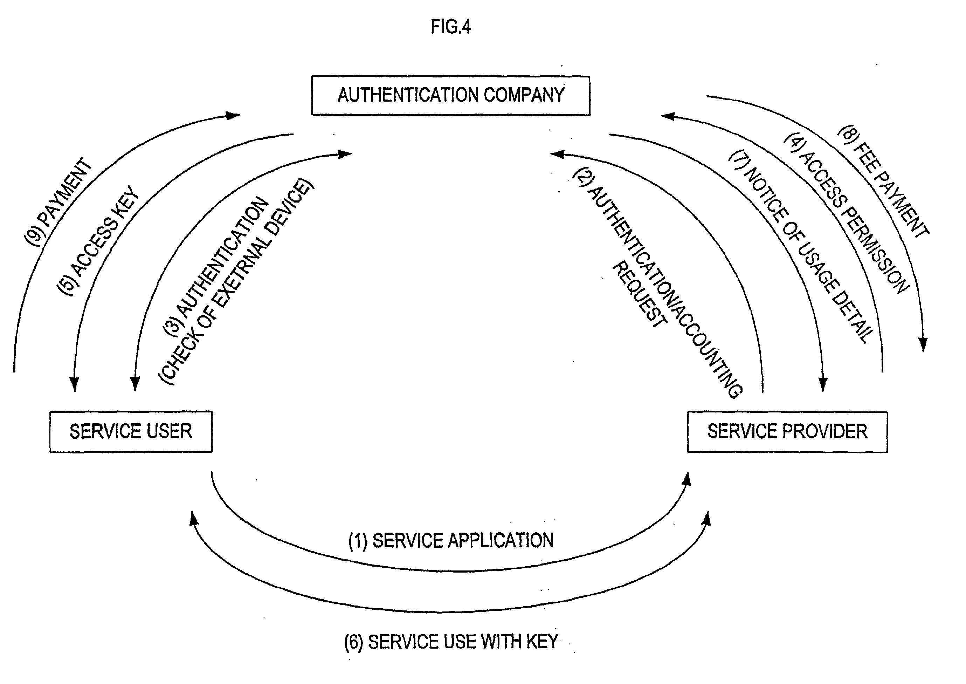

Fig. 4 is a schematic structural diagram of the authentication system of the present embodiment. In Fig. 4, a service user is a user 1 who possesses the portable phone device 4a and the external device 4b, a service provider owns the service provision server 2, and an authentication company owns the authentication reception server 3, the fee management server 6 and the key issuance server 5.

As shown in Fig. 4, the service user "(1) applies for a service" to the service provider. The service provider, when it receives this application, "(2) requests authentication and accounting" of the user to the authentication company. The authentication company, in response to this request, performs "(3) authentication (verification of the external device 4b)" of the service user. When the service provider issues "(4) permission of use" to the authentication company according to the result, the authentication company issues "(5) an access key" to the service user. The service user, for the first time after this access key is issued, can "(6) receive the service with the key" from the service provider. The authentication company also sends "(7) a notice of usage details" of the user to the service provider. The usage details, for example, can include information such as access date, access time and access frequency to the given service provision server 2. The authentication company performs "(8) payment of a fee" for the service rendered, while the service user performs "(9) payment" of the service fee to the authentication company.

Respective components constituting the authentication system of the present embodiment are hereafter described individually.

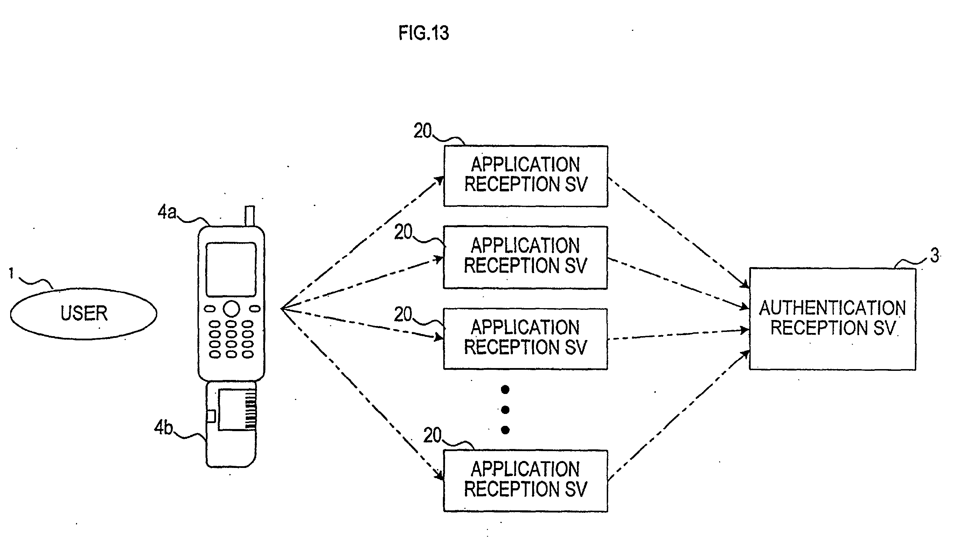

The portable phone device 4a is an ordinary device which is capable of radio communication (including phone calls). As shown in Fig. 13, it has operation buttons for receiving information input such as phone numbers and letters from the user 1, a monitor for displaying information to the user 1, and the like. The portable phone device 4a is connected to the Internet via a predetermined connection network.

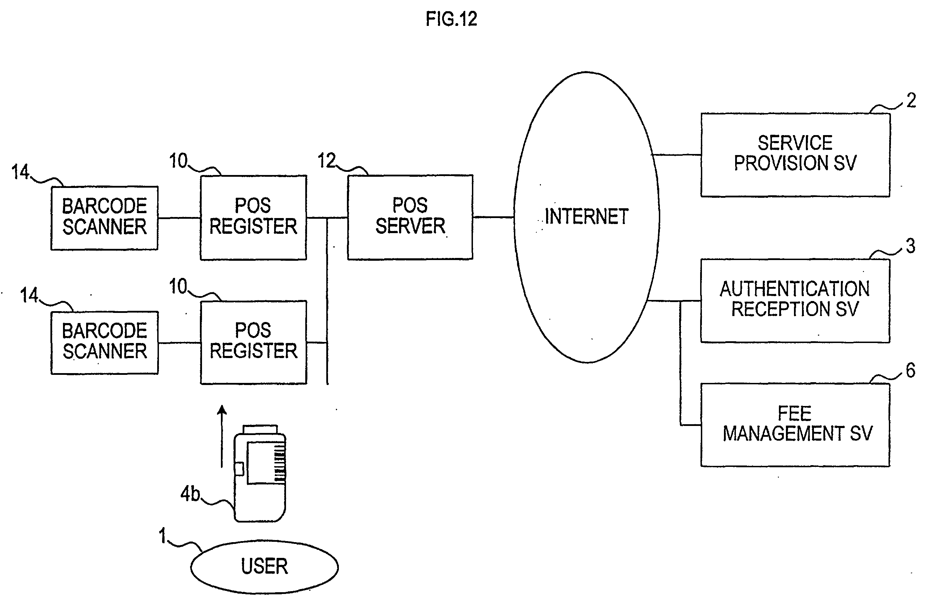

The internal structure of the external device 4b has already been described with reference to Fig. 1. As shown in Figs. 12 and 13, it is detachably connected to the portable phone device 4a. The external device 4b stores information such as a phone number of the portable phone device used for the previous connection and a serial number thereof, etc. as well as an ID specific to the device. The external device 4b transmits the stored information by instructing the connected portable phone device 4a to communicate with the outside. Particularly, when the external device 4b, when it receives a notice of authentication receipt from the authentication reception server 3, generates authentication information from the stored information in response to the instructions, and instructs the portable phone device 4a to transmit the authentication information to the authentication reception server 3. In other words, the external device 4b, under the condition that it is connected to the portable phone device 4a, functions as a device for transmitting the authentication information of the user 1 who applies for the service to the authentication reception server 3.

The external device 4b displays an input form for receiving user input of a code number for starting the device, a service number for indicating a service type for which the user 1 applies and the like, on a monitor of the portable phone device 4a. The external device 4b provides no operation switch for receiving direct input from the user 1. It is simple, small and light. On the external surface of the external device 4b, the ID is shown in barcode.

The authentication reception server 3 is provided to be accessed via the Internet, and performs authentication based on the authentication information transmitted from the user 1. For the purpose of such authentication, the authentication reception server 3 stores various information of corresponding IDs of respective external devices, and has control over the respective external devices based on their IDs.

The fee management server 6 is provided to be accessed via the Internet, and in response to a request from the authentication reception server 3, checks a collectable balance of the user 1 account from which a service fee is collected, based on information on a balance of a bank account or a balance of a credit limit of a credit card of the user 1. The fee management server 6 also performs a process for collecting a service fee from the user 1 who receives the service, and a process of paying the service fee to the service provision server 2. The service fee from the user 1 may be deducted from the bank account of the user 1, collected from the credit card company, or, assuming that an advance (prepaid money) made by the user 1 is a collectable balance, for example, subtracted from the advance.

The key issuance server 5 is provided to be accessed via the Internet. When it receives a request to issue an access key from the authentication reception server 3, the key issuance server 5 generates a unique access key which serves as an access code for one time use. The generated key is issued to both the portable phone device 4a possessed by the user 1 and the service provision server 2 from which the user 1 intends to receive the service.

The service provision server 2 provides a service such as supply of information, sales of goods and services, etc. on the Web. The service provision server 2 also limits the user 1 who can be provided with the service based on the access key issued from the key issuance server 5. In other words, it rejects providing the service to the user 1 who does not possess the same access key with the access key that the service provision server 2 has.

Control processes performed by the respective portions in order to realize the aforementioned authentication system are explained below.

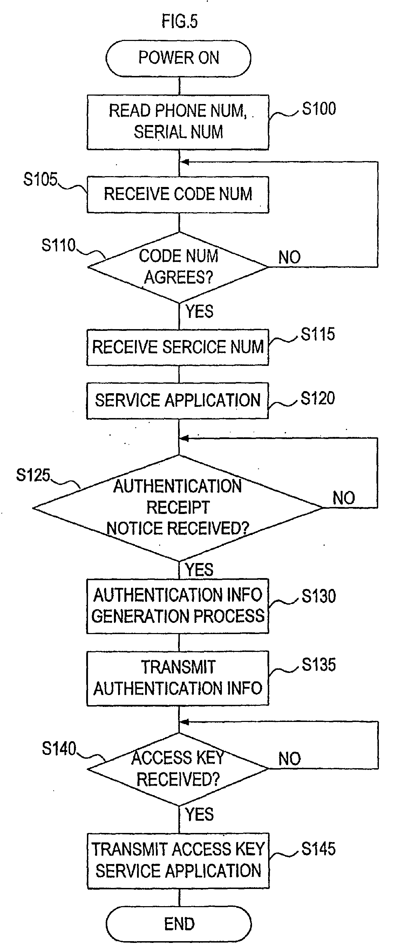

A control process performed by the external device 4b is described by way of a flowchart of Fig. 5. The external device 4b, when switched on by being connected to the portable phone device 4a, reads and stores a phone number and a serial number of the portable phone device 4a (S100). The external device 4b displays an input form for a code number on the monitor of the portable phone device 4a to receive code number input from the user 1 (S105). When the user 1 inputs the code number (for example, 1234 is inputted) by pushing the operation buttons on the portable phone device 4a, the external device 4b detects this code number via the portable phone device 4a, and compares the inputted code number with a code number stored in itself (S110). If these values are not the same (S110: NO), the external device 4b continues to receive code number input.

On the other hand, if these values are the same (S110: YES), the external device 4b stops receiving code number input, and displays an input form for a service number on the monitor of the portable phone device 4a to receive service number input from the user 1 (S115). When the user 1 pushes the operation buttons of the portable phone device 4a and the service number is inputted (for example, 1111# is inputted), the external device 4b detects the service number via the portable phone device 4a and instructs the portable phone device 4a to communicate with the service provision server 2 corresponding to the service number to apply for the service (S120). The portable phone device 4a then transmits information for service application including an ID of the external device 4b connected thereto to the service provision server 2.

The external device 4b is then in the idle state till a notice of authentication receipt is transmitted from the authentication reception server 3 to the portable phone device 4a (S125: NO). When the external device 4b detects receipt of a notice of authentication receipt via the portable phone device 4a (S125: YES), it performs an authentication information generation process for generating authentication information from the stored information (S130). The authentication information generation process will be described later in details.

The external device 4b then instructs the portable phone device 4a to communicate with the authentication reception server 3 to transmit the generated authentication information (S135). After this, the external device 4b is in the idle state till an access key is transmitted to the portable phone device 4a from the key issuance server 5 (S140: NO). When the external device 4b detects receipt of the access key via the portable phone device 4a (S140: YES), it transmits information for service application containing this access key to the service provision server to apply for the service (S145).

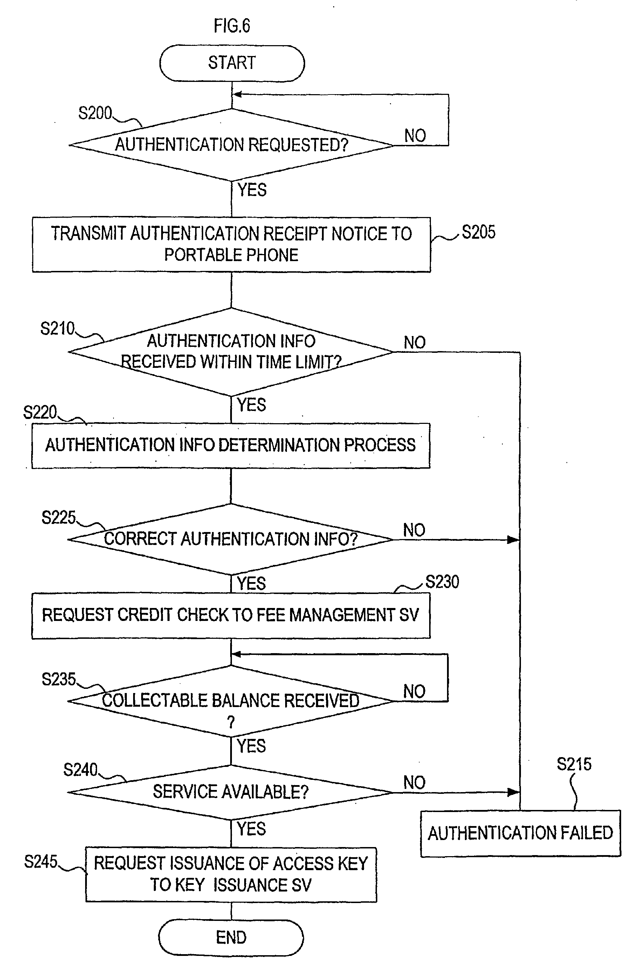

A control process performed by the authentication reception server 3 is now explained by way of a flowchart in Fig. 6. When the authentication reception server 3 receives the information for service application from the portable phone device 4a as a request of authentication from the service provision server 2 (S200), it transmits a notice of authentication receipt to the portable phone device 4a (S205). The authentication reception server 3 is in the idle state till it receives authentication information from the portable phone device 4a (S210). If it fails to receive authentication information within a given time period after it transmits the notice of authentication receipt (S210: NO), it determines that there is a fear of unauthorized access and the authentication is failed (S215). On the other hand, when it receives the authentication information within the given time period (S210: YES), it performs an authentication information determination process for authenticating the user 1 based on the authentication information (S220). If the authentication reception server 3 determines that the authentication information is not correct as a result of this process (S225: NO), the authentication is failed (S215). On the other hand, if the authentication reception server 3 determines that the authentication information is correct as a result of this process (S225: YES), it requests the fee management server 6 to check a credit situation (S230). The authentication reception server 3 is in the idle state till it receives collectable balance information from the fee management server 6 (S235: NO). When it receives the information (S235: YES), it determines whether it is proper to provide the service to the user 1 (S240). When the authentication reception server 3 determines that the user 1 is not suitable for receiving the service owing to no or less collectable balance (S240: NO), the authentication is failed (S215). On the contrary, if the authentication reception server 3 determines that the user 1 is suitable for receiving the service owing to a sufficient collectable balance (S240: YES), it requests the key issuance server 5 to issue an access key (S245).

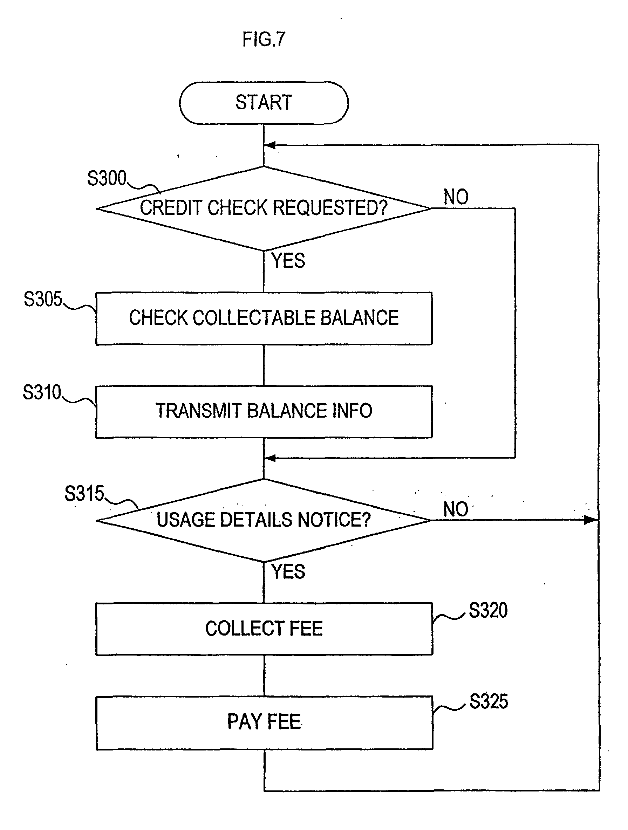

A control process performed by the fee management server 6 is explained by way of a flowchart in Fig. 7 hereinafter. The fee management server 6, when it is requested to check a credit situation from the authentication reception server 3 (S300: YES), checks a collectable balance of the user 1 account as requested (S305), and transmits this information to the authentication reception server 3 (S310). The fee management server 6, when it receives a notice of usage details for the service from the service provision server 2 (S315: YES), performs a process for collecting the service fee from the user 1 identified by the notice (S320), and also performs a process for paying the service fee to the service provision server 2 (S325).

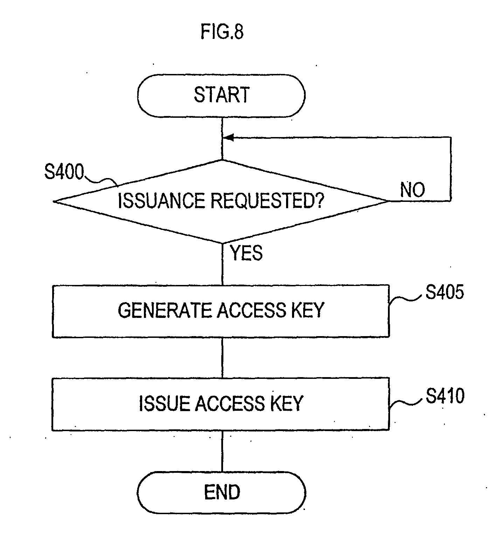

A control process performed by the key issuance server 5 is explained by way of a flowchart in Fig. 8. The key issuance server 5, every time it is requested to issue an access key from the authentication reception server 3 (S400: YES), generates a different access key which serves as an access code for one time use (S405). It issues the generated access key to both the portable phone device 4a possessed by the user 1 and the service provision server 2 which the user 1 intends to access (S410).

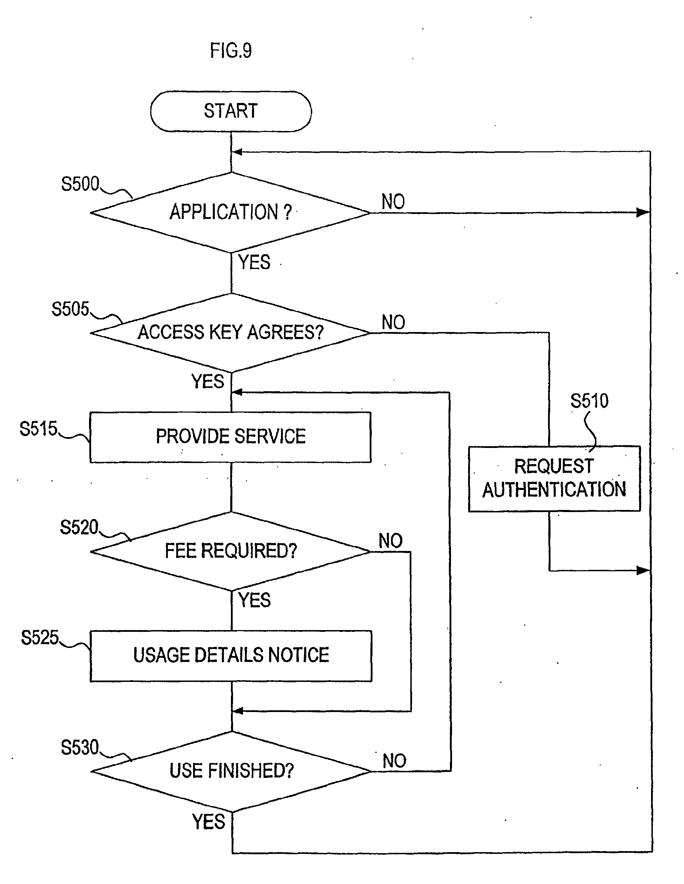

A control process performed by the service provision server 2 is explained by way of a flowchart in Fig. 9. The service provision server 2, when it receives a service application (S500: YES), checks whether there is an access key which agrees to the access key issued from the key issuance server 5 in the received information for the service application (S505). If it is not in the information (S505: NO), forwards the information for service application to the authentication reception server 3 to request the authentication (S510). On the other hand, in S505, if there is an access key which agrees to the access key issued from the key issuance server 5 (S505: YES), the service provision server 2 transmits the information for providing the user 1 with the service to the portable phone device 4a (S515). Then, the service provision server 2, when the service requires fee payment (S520: YES), sends a notice of usage details for the service to the fee management server 6 (S525). The service provision server 2, when the user 1 finishes with the service (S530: YES), ends provision of the service.

The authentication information generation process performed by the external device 4b is now explained. The external device 4b generates authentication information by combining a service number inputted by the user 1, number of times the user 1 applied for the service (hereinafter, referred to as application frequency), a phone number of a portable phone device connected the previous time when the service was applied for (hereinafter, referred to as previous phone number) and its serial number (hereinafter, referred to as previous serial number), and a phone number of the portable phone device 4a currently connected (hereinafter referred to as current phone number) and its serial number (hereinafter, referred to as current serial number) as additional information with the ID of the external device 4b.

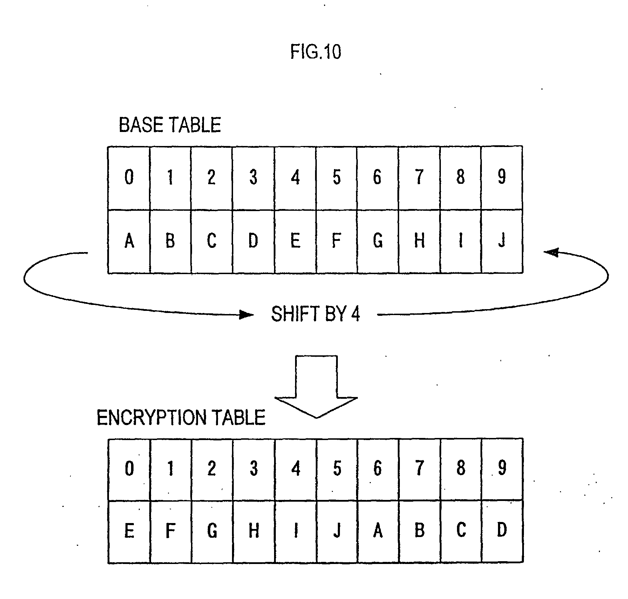

The external device 4b creates a table for encryption used for generating authentication information (hereinafter, referred to as encryption table). For the purpose of creating the encryption table, the external device 4b, as shown in Fig. 10, stores beforehand a base table for transforming one value to another which has one-to-one relation with the original value. Each of the external devices 4b has its own base table, and the manner of transformation is different in each table. The authentication reception server 3 stores information of which external device 4b with which ID holds which base table. In case of a base table shown in Fig. 10, values 0-9 are transformed into values A-J. In short, this base table transforms, for example, 0369 into ADGJ. The external device 4b creates an encryption table of which transformation manner is different by shifting a set of values after transformation by the application frequency with respect to a set of values before transformation, based on the base table. For example, when the application frequency stored by the external device 4b is 4, the values after transformation A-J is shifted by 4 with respect to the values before transformation 0-9 based on the base table, and 0-9 is transformed to E-J, A-D in this order. In short, this encryption table transforms 0369 to EHAD.

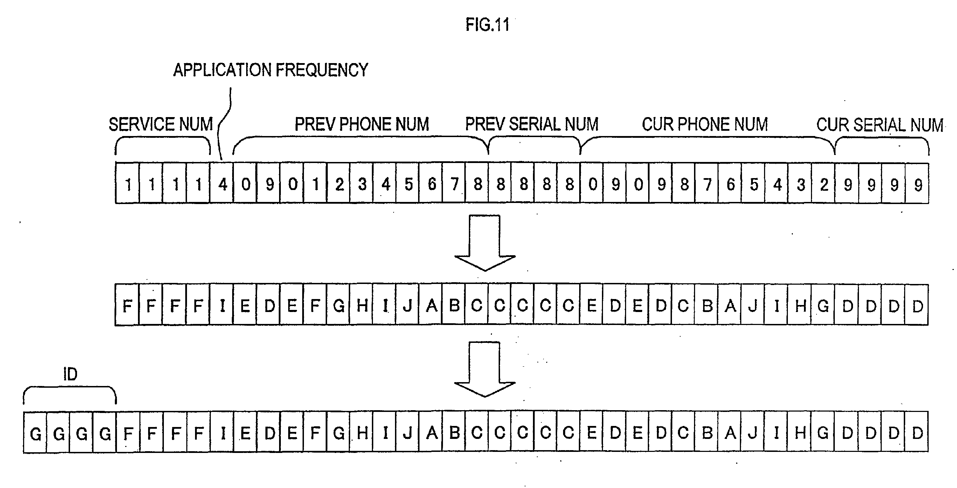

The external device 4b then performs an encryption process of information necessary for authentication using the created encryption table. The external device 4b, as shown in Fig. 11, first arranges the service number (in this example, 1111), application frequency (in this example, 4), previous phone number (in this example, 09012345678), previous serial number (in this example, 8888), current phone number (in this example, 09098765432) and current serial number (in this example, 9999) in a predetermined order. This predetermined order, in this example, is an order by which the respective values are arranged as respective units. However, the respective values can be divided into plural units so that the divided units are arranged in the order. The predetermined order is also stored in the authentication reception server 3.

The external device 4b transforms a string of numbers arranged as above into a string of characters by means of the aforementioned encryption table. However, the external device encrypts the ID (in this example, 3333) by means of a common table (hereinafter, referred to as common table) possessed by all the external devices 4b. Detailed explanation is omitted since the encryption manner by means of the common table is similar to the aforementioned manner. As a result of the encryption, the ID is transformed from 3333 into GGGG. The common table is also stored in the authentication reception server 3.

The external device 4b then sets the transformed ID at a predetermined position of the character strings generated by the encryption table. Here, the transformed ID value is directly added at a head position of the character string. However, for example, the transformed ID value can be divided into plural units so that the units of the divided values are respectively set at predetermined positions in the character string. Information of the predetermined positions are also stored in the authentication reception server 3.

The external device 4b generates the authentication information in the above manner. Since this authentication information incorporates information which varies depending on the access state like the application frequency, even the authentication information generated in the same external device 4b varies every time it is generated. Moreover, since the encryption table for the encryption is constantly varied, the resulted encrypted authentication information is also constantly varied.

The authentication information determination process performed by the authentication reception server 3 when it receives the authentication information generated by the external device 4b as above is now explained. The authentication reception server 3 deciphers the received authentication information by following the steps for generating the authentication information in the external device 4b backward. The authentication reception server 3 first extracts the transformed value of ID from the predetermined position (the head position in this example) of the received authentication information, and deciphers the same by means of the common table. The authentication reception server 3 then refers to the base table possessed by the external device 4b of the deciphered ID and the application frequency with respect to the ID in the database. The application frequency stored in the above database is a value increased and stored per each ID every time the authentication reception server 3 receives information for service application from the portable phone device 4a to which the external device 4b is connected. The application frequency stored in the external device 4b is a value increased and stored every time the external device 4b performs a process for applying for the service.

The authentication reception server 3 specifies the encryption table used for encryption from the referred base table and application frequency, and deciphers the authentication information based on the specified encryption table. The authentication reception server 3 then obtains each pieces of information from the deciphered number string and arranges them according to the predetermined order.

The authentication reception server 3 checks whether the current phone number obtained from the authentication information satisfies requirements of a phone number. For example, if this information is a number string which begins with other than 0, the authentication reception server 3 determines that this information clearly does not satisfies the requirements of a phone number, and rejects authentication. In other words, the authentication reception server 3 rejects performing authentication unless the information on the caller's phone number is notified.

On the other hand, if the information on the current phone number satisfies the requirements of a phone number, the authentication reception server 3 stores the current phone number and the serial number to be used as information of the previous phone number and serial number for the next opportunity for authentication.

The authentication reception server 3 performs authentication of the previous phone number and serial number obtained from the authentication information. The authentication reception server 3, as mentioned above, stores beforehand the information of the previous phone number and serial number, which were then the current phone number and serial number, obtained at the time of the previous authentication, and uses the information of the previous phone number and serial number for the latest authentication. In other words, the authentication reception server 3 compares the previous phone number and serial number obtained from the authentication information with those of the stored information. If they agree with each other, the authentication reception server 3 determines that the information is correct, and, if not, rejects authentication.

The authentication reception server 3 further compares the application frequency obtained from the authentication information with that of the stored information. If they agree, the authentication reception server 3 determines that the information is correct, and, if not, rejects authentication.

Accordingly, the authentication reception server 3 determines that the authentication information is correct by determining that every piece of the authenticated information is correct.

For the first time authentication, there is no information of the previous phone number and serial number, for example. In this case, the authentication reception server 3 determines the agreement of the information by confirming that there is no information present.

An example of how the external device 4b of the present embodiment is used without being connected to the portable phone device 4a is hereafter described. Fig. 12 is an explanatory view for explaining the service using a POS register 10. In Fig. 12, the POS registers 10, 10, ... provided in a store are connected communicable with the authentication server 3, fee management server 6 and the service provision server 2 via a POS server 12, which centrally controls each of the POS registers 10, 10, ..., and the Internet. Each of the POS registers 10, 10, ... has a barcode scanner 14 for reading barcode information and a connection terminal (not shown) to which the external device 4b is connected detachably.

The external device 4b, when it detects connection with the POS register 10 by, for example, being inserted to the POS register 10, generates authentication information by combining the application frequency and the previous phone number and serial number, which are information stored in the external device 4b, with the ID to transmit the information to the POS register 10. In other words, the external device 4b generates the authentication information by combining different additional information when it is connected to the POS register 10, compared to the case in which it is connected to the portable phone device 4a.

The POS register 10 receives the authentication information stored in the external device 4b (i.e. authentication information generated in the external device 4b) from the external device 4b, and, when the price information is inputted from the external source by means of input buttons of the POS register 10, transmits the authentication information and the price information to the authentication reception server 3. The authentication reception server 3, when it receives the information, determines whether the received authentication information is correct. At this time, the authentication reception server 3 deciphers the authentication information transmitted from the POS register 10 in a manner different from that for the authentication information transmitted from the portable phone device 4a (that is, in a manner according to generation of authentication information by the external device 4b connected to the POS register 10).

The authentication reception server 3, when it determines that the authentication information is correct, requests the fee management server 6 to perform a process based on the price information. The requested fee management server 6 performs the process for collecting the fee based on the price information from the user 1 identified by the authentication information.

For example, when the user 1 purchases some goods in the store, the external device 4b possessed by the user is inserted and connected to the POS register 10 provided in the store. Under this condition, the store keeper inputs the price by operating the input buttons of the POS register 10. As a result, the price information by which collection of the amount of the price is instructed and the authentication information of the external device 4b is transmitted from the POS register 10. If the authentication reception server 3 determines that the authentication information is correct, the fee management server 6 performs the process for collecting the amount from the user 1 based on the price information. Processes like withdrawal of cash or deposit of prepaid money can also be performed upon requests from the POS register 10.

The POS register 10 can transmit the ID to the authentication reception server 3 even if the external device 4b is not directly connected, by scanning a barcode shown on an external surface of the external device 4b with the barcode scanner 14.

In other words, the user 1 presents the store keeper the external device 4b, and the store keeper scans the ID shown on the external surface of the external device 4b with the barcode scanner 14 of the POS register 10. The shop keeper adds necessary information and transmits the information to the authentication reception server 3, fee management server 6 or service provision server 2 from the POS register 10. For example, in case that the POS register 10 transmits the ID of the external device 4b to a predetermined service provision server 2, the external device 4b can be used as a point card for counting the user 1 visits to the store. It is also possible to instructs the service provision server 2 to add benefits to the external device 4b so that the user 1 can receive a specific service.

As explained above, the authentication system of the present embodiment can dispense with user input of a complicated password for authentication and safekeeping of the password, and thus it is convenient for the user 1. Moreover, since the system provides the service according to a result of determination of the authentication information, unauthorized access to the service is prevented.

Particularly, in the authentication system of the present embodiment, the key issuance server 5 issues an access key to both of the portable phone device 4a and the service provision server 2. Therefore, highly secure authentication is achieved. The service provision server 2 performs authentication of the portable phone device 4a which transmits the access key, by determining whether the keys issued from the key issuance server 5 to the both parties agree. Therefore, the key issuance server 5 is not required to issue access keys in a predetermined form, but can issue an access key different in each issuance which serves as an access code for one-time use. Accordingly, forgery of the access key by others can be difficult.

The authentication system of the present embodiment comprises the fee management server 6 which sets limits to the user credit and provides the service till the limit is reached. It also provides the service according to the balance of the prepaid money. The external device 4b can also be used as a wallet of electronic money. Since authentication of the external device 4b together with the portable phone device 4a is possible, credit accounting with more security than a credit card with embedded IC chip is realized. Accordingly, the authentication system of the present embodiment can provide the service with security to a user who utilizes the Internet and the phone lines.

In the authentication system of the present embodiment, the fee management server 6 checks a collectable balance of a user 1 account before the service provision server 2 provides the service to the user 1. As a result, it is possible not to provide the service to the user 1 who is improper to receive the service. Furthermore, since the check of the collectable balance is completed before provision of the service, the service provision server can avoid providing the service of which fee exceeds the collectable balance of the user 1 account. Accordingly, in auction services, for example, it is possible to prevent inconvenience such that a successful bitter fails to make the payment and the transaction is failed.

In the authentication system of the present embodiment, by connecting the external device 4b to the POS register 10 in the store, payment from a bank account, credit card and prepaid money can be performed with the external device.

According to the authentication system of the present embodiment, since the authentication information is generated by incorporating the application frequency which serves as a code changing with the access state as additional information, the authentication information itself is not a fixed value. Therefore, forgery of the authentication information becomes difficult. Particularly, each change of encryption tables makes the authentication information change in a complicated manner. As a result, the forgery becomes even more difficult.

In the authentication system of the present embodiment, the external device 4b, after it is connected to the portable phone device 4a, fails to start until the user 1 inputs a correct code number. Therefore, even if the external device 4b falls into the wrong hands as a result of theft or loss, unauthorized access by others can be avoided.

In the authentication system of the present embodiment, since the ID is shown in barcode on the external surface of the external device 4b, the ID can be easily transmitted to the authentication reception server 3 by means of the barcode scanner 14. Accordingly, there is no need to provide an additional device to which the external device 4b is connected to read information stored in the external device 4b.

In the authentication system of the present embodiment, the authentication reception server 3 rejects performing authentication unless the information of the current phone number is notified as the information incorporated to the authentication information. Accordingly, those who attempt unauthorized access cannot have authentication unless they transmit the information of the phone numbers themselves. Thus, cheating can be prevented.

In the authentication system of the present embodiment, the device 4b can receive the service not only by connecting to the portable phone device 4a but also via the POS register 10. This allows the user 1 to receive a wide range of services.

According to the authentication system of the present embodiment, high level authentication can be provided by connecting the external device 4b to the portable phone device 4a and using information specific to each of the external device 4b and the portable phone device 4a collectively. The present authentication system, for example, can be applied not only for ordinary services of sales like purchase of goods but also for monitoring of the access state of the service and controlling of the access by voice information using phones. Moreover, the system can be applied for skills authentication such as the authentication of qualifications, authentication of a driving license holder upon renting a car, and authentication of security for safe transactions. Besides, the present authentication system can be applied to all kinds of authentication system, such as for authentication of copy-protection upon distribution or sales of software, certification of virus-free software, and authentication of adult for vending machines for alcohol, cigarette, etc.

The external device 4b used in the authentication system of the present embodiment realizes highly secure authentication by receiving a notice of authentication receipt from the authentication reception server 3 and transmitting the authentication information to the authentication reception server 3. For example, in the present embodiment, the authentication reception server 3, in case that it fails to receive authentication information within a given time period after the notice of authentication receipt, determines that there is a fear of unauthorized access and fails the authentication. In other words, by setting this time period as short as a range which cannot be exceeded in normal use, it determines that unauthorized access is performed when the time period is exceeded. Thereby, cheating such as to transmit the authentication information by manual input upon receipt of the notice of authentication receipt can be avoided. Other than this, for example, the authentication reception server 3 may transmit given data to the external device 4b when transmitting a notice of authentication receipt, and require complicated calculation or encryption to be performed to these data to obtain the outcome as the authentication information. In other words, the authentication reception server 3 can prevent unauthorized access by forgery of authentication information, by requesting information unpredictable for those who attempt unauthorized access or requiring difficult tasks. Moreover, while high level authentication is realized, the user 1 is free from input of a complicated password and safekeeping of the password, thus it is convenient for the user 1.

Particularly, the external device 4b is connected to the portable phone device 4a which can be communicated by radio. Accordingly, the user 1 can carry the external device 4b with the portable phone device 4a all the time. Since there is no restriction when or where to enjoy the service, the service tends to be more accessible.

Although a preferred embodiment of the present invention has been described, it is to be clearly understood that the invention may be embodied in a variety of ways.

For example, in the authentication system of the present embodiment, when the user 1 applies for the service, the portable phone device 4a communicates with the service provision server 2 to apply for the service, and then the service provision server 2 requests the authentication reception server 3 to perform authentication. However, other methods can be selected. For example, the portable phone device 4a may directly request the authentication reception server 3 to perform authentication.

Additionally, as shown in Fig. 13, the application reception server 20 specified for receiving information transmitted from the portable phone device 4a first may be provided on a communication path from the portable phone device 4a to the authentication reception server 3. Particularly, in case that a plurality of the application reception servers 20 are provided and the external device 4b selects one of the application reception servers 20 to instruct to transmit the information to the selected application reception server 20 when the external device 4b instructs the portable phone device 4a to communicate to transmit information, improvement in security level can be achieved.

In other words, the external device 4b instructs the portable phone device 4a to transmit the information to the application reception server 20 selected according to a predetermined rule. The application reception server 20 which received the information from the portable phone device 4a forwards the information to the authentication reception server 3. The authentication reception server 3 stores the same predetermined rule that the external device 4b keeps, and determines whether the received information is transmitted via the application reception server 20 selected according to the predetermined rule. The authentication reception server 3, if it determines that the information is not transmitted according to the predetermined rule, rejects authentication and prevents the service provision server 2 from providing the service. In this manner, by changing the application reception server 20 with which the external device 4 communicates, even if a cheater transmits authentication information completely forged, the authentication reception server can determine that it is unauthorized access if the path through which the information is passed is wrong.

Various methods can be used for the predetermined rule for selecting the application reception server 20. For example, every time the external device 4b applies for the service, different application reception server may be selected in turn. Otherwise, the external device 4b makes each service number correspond to the respective application reception server 20 beforehand. In accordance with the service number inputted by the user 1, the external device 4b may select the corresponding application reception server 20.

The code number stored in the external device 4b in the present embodiment may be a prefixed value. It may be set by the user 1 when the user 1 uses the external device 4b for the first time. The set number may be changed at any time. Moreover, the external device may dispense with the code number input, or if required, the code number input may be switched between required and not required.

This code number may be a phone number or serial number of the portable phone device 4a to which the external device 4b is to be connected. This method allows the external device 4b to determine the values of the phone number and serial number read from the portable phone device 4a by comparing them with the stored values when the external device 4b is connected to the portable phone device 4a. Accordingly, the user 1 can dispense with pushing of the operation buttons to input the code number, and only connecting the external device 4b to the portable phone device 4a completes the code number input, which is convenient to use. Moreover, despite such a simple manner of input, in case the external device 4b falls into the wrong hands by theft or loss, unauthorized access of the service by others can be prevented since the external device 4b cannot be started with other portable phone device.

In the present embodiment, the user 1 pushes the operation buttons of the portable phone device 4a and the service number corresponding to the service of the user 1 request is inputted. However, it is also possible, for example, that operations for applying for a fixed service may be started automatically when the external device 4b is inserted into the portable phone device 4a or when a predetermined time (more than 3 seconds, for example) passes after the external device 4b is inserted. In this manner, when there is a service used all the time, it is not necessary to perform push operation to input the service number and it is convenient. The input means of the service number may be not only the operation buttons of the portable phone device 4a, but the operation buttons may be provided on the external device 4b itself, for example.

In the present embodiment, comparatively simple method of encryption is explained as an example for convenience of explanation. Besides this method, however, various methods of encryption can be adapted.

In the present embodiment, the application frequency is used as a code changing with the access state to be incorporated into the authentication information. However, the service number previously inputted or the number of times the specific service is used can be used as well. The authentication information to be transmitted may be the exact information stored in advance.

In the present embodiment, the authentication reception server 3 performs authentication of the previous phone number and serial number. However, it is also possible to allow just one portable phone device 4a to be used with the external device 4b. In other words, the authentication reception server 3 stores the phone number or serial number of the accessible portable phone device 4a as a fixed value beforehand, and by denying authentication in case that the current phone number or serial number disagree with the fixed value, application from other portable phone devices becomes impossible. Accordingly, even if the external device 4b falls into the wrong hands by theft or loss, the external device 4b connected to other phone devices fails to pass authentication, and thus it can prevent any damage to the user 1.

In the present embodiment, the ID in barcode is indicated on the surface of the external device 4b. However, instead of the indication in barcode, for example, the ID can be shown in characters like numbers and alphabets. In short, as long as number information specific to the device is shown, any indication manner is allowable. Additionally, other than the barcode scanner 14, optical character readers can be used as the reader of such number information.

In the present embodiment, the authentication reception server 3, if it fails to receive the authentication information within a given time period after the transmission of a notice of authentication receipt, fails authentication. However, for example, the authentication reception server 3 may transmit given data to the portable phone device 4a when transmitting a notice of authentication receipt, and request the outcome of complicated calculation and encryption concerning the data. In other words, the authentication reception server requests information hardly unpredictable or sets conditions hardly practicable for those who attempt unauthorized authentication, thereby preventing cheating.

In the present embodiment, the authentication reception server 3 rejects performing authentication unless the received authentication information includes a phone number of the caller's portable phone device 4a. However, this information on the phone number may be transmitted separately from the authentication information. The authentication reception server can also prevent interference to the whole system by rejecting calls from those who attempt unauthorized access with their phone numbers notified.

In the authentication system of the present embodiment, merely whether or not the access keys agree is determined. However, the key issuance server 5, when it issues the access key to the service provision server 2, may also transmit to the service provision server 2 information (information that can identify the user 1, such as the authentication information and ID) of the external device 4b connected to the portable phone device 4a to which the key issuance server 5 issues a common access key. In this manner, the service provision server 2, when it receives an application for the service from the user 1 who possesses the access key, can determine that the user 1 is the very user 1 to whom the access key is issued without mistake. In case that the access key agrees but the information on the user 1 disagrees, the service provision server 2 can determine that there is a possibility of unauthorized access by theft of the access key, and rejects providing the service.

The service provision server 2 can prevent unauthorized access owing to theft of the access key and forgery of the user information by rejecting providing the service unless it receives an application for the service from the user 1 possessing the same access key within a predetermined period of time after it was issued the access key from the key issuance server 5.

In the present embodiment, the key issuance server 5 issues the access keys to the user 1 and the service provision server 2. However, the key issuance server 5 may issue a prefixed key only to the user 1. Also, the service provision server 2 may provide the service directly when the authentication reception server 3 determines that the user 1 can receive the service, under the condition that the key issuance server 5 is not provided.

In the present embodiment, the external device 4b is connected to the portable phone device 4a. However, it can be connected to other phone device having a calling function (such as a phone device used for ordinary calls and a personal computer comprising a communication modem, which can execute communication via phone lines). Devices which can be connected via transmission lines to the authentication reception server can be used as well, as in the case of the POS register 10, even if the devices have no calling function.

In the present embodiment, the portable phone device 4a and each of the servers may communicate with each other either via phone lines or not via phone lines (i.e. via private lines and via radio).

The respective servers can be gathered and controlled in one computer. A highly secure authentication system can be attained by controlling the respective servers together. The respective servers also can be installed separately depending on their roles. Thus, assignment of authentication tasks to the respective servers playing different roles becomes easy. Furthermore, concentration of access to one server can be dissolved, and multiplexing of the intensively accessed server can be easy.

In the present embodiment, the external device 4b makes instruction to transmit the authentication information when receiving a notice of authentication receipt from the authentication reception server 3. However, the external device 4b may generate and transmit the authentication information when it first applies for the service, for example.

Particularly, if the service does not necessarily require high level authentication, authentication may be performed only with the first authentication information transmitted, by omitting the step in which the external device 4b makes instruction to transmit the authentication information when it receives a notice of authentication receipt from the authentication reception server 3.

In other words, the external device 4b, after receiving the service number input in step 115 in the flowchart of Fig. 5, performs the authentication information generation process (S130), skipping steps 120 and 125, and transmits this authentication information (S135) via the portable phone device 4a to apply for the service.

The service provision server 2, in the flowchart of Fig. 9, receives this application (S500: YES, S505: NO), forwards the authentication information to the authentication reception server 3 and requests authentication (S510).

The authentication server 3, in the flowchart of Fig. 6, receives the authentication information in step 200 and performs the authentication information determination process with respect to the received authentication information (S215), skipping steps 205 and 210.

In this way, the authentication steps can be simplified.

### Industrial Availability

As described above, the external device and authentication system in the present invention are used with phones and portable phones, and are suitable for user authentication.

## Claims

1. An external device for portable phones, to be connected to a portable phone device, wherein the external device processes and stores information necessary for authentication and instructs the portable phone device to communicate, while it responds to instructions from the portable phone device and starts to operate according to the instructions.

2. An external device for use in an authentication system, the system comprising:
a device for transmitting authentication information to be used for authenticating a user who applies for a service; and
an authentication reception server for receiving the authentication information and determining whether the authentication information is correct, wherein
the external device is detachably connected to a phone device having a calling function and stores the authentication information, and, under the condition that the external device is connected to the phone device, functions as a device for transmitting the authentication information, and
the external device instructs the phone device to communicate with the authentication reception server to transmit the authentication information, in response to instructions from the authentication reception server.

3. The external device as set forth in claim 2 wherein said phone device is a portable phone device which can be communicated by radio.

4. An authentication system which, based on authentication information used for authenticating a user who applies for a service, determines whether to permit the user to receive the service, comprising:
an external device which is detachably connected to a phone device having a calling function, stores the authentication information, and instructs the phone device to communicate to transmit the authentication information under the condition that the external device is connected to the phone device;
an authentication reception server for receiving the authentication information and determining whether the authentication information is correct; and
a service provision server for providing a service to the user based on a result of the aforesaid determination by the authentication reception server.

5. An authentication system for, based on authentication information used for authenticating a user applying for a service, determining whether to permit the user to receive the service, comprising:
a service provision server for providing the service to the user;
an external device detachably connected to a phone device having a calling function, for storing the authentication information and, under the condition that the external device is connected to the phone device, instructing the phone device to communicate to transmit the authentication information;
a key issuance server for issuing an access key to the phone device to which the external device is connected and the service provision server upon request from an external source; and
an authentication reception server for receiving the authentication information and, when it determines that the authentication information is correct, requesting the key issuance server to issue the access key,
wherein the service provision server provides the service to the user, when an application for the service is made with the access key by the phone device to which the external device possessed by the user is connected.

6. The authentication system as set forth in claim 4 or 5, further comprising a fee management server for payment of a fee for the service provided by said service provision server.

7. The authentication system as set forth in claim 4 or 5, further comprising a fee management server for collecting a fee for the service provided by said service provision server from a user who receives the service,
wherein the fee management server checks a balance collectable as the service fee from the user, before the service provision server provides the service to the user .

8. The authentication system as set forth in claim 6 or 7, wherein said external device is designed to be connected to a POS register which is connected to said authentication reception server and said fee management server via a communication line,
the POS register transmitting the authentication information stored in the external device and price information inputted from an external source,
said authentication reception server receiving the authentication information transmitted from the POS register and determining whether it is correct, and
said fee management server, when the authentication reception server determines that the authentication information is correct, performing a process for collecting a fee from the user identified by the authentication information based on the price information transmitted from the POS register.

9. The authentication system as set forth in any one of claims 4-8, wherein said external device stores an ID specific to the device and generates said authentication information by combining at least one of the information of a code changing with the access state, a phone number of the previously used phone device and the serial number thereof, and a phone number of the currently used phone device and the serial number thereof, with the ID.

10. The authentication system as set forth in any one of claims 4-9, wherein said external device changes a recipient of a call from said phone device.

11. The authentication system as set forth in any one of claims 4-10, wherein said external device starts to operate when a code number inputted by a user and a code number stored in the device agree.

12. The authentication system as set forth in any one of claims 4-11, wherein number information specific to the device is shown on said external device.

13. The authentication system as set forth in any one of claims 4-12, wherein
said external device is designed to make said phone device transmit information of a phone number of the phone device connected thereto, along with said authentication information or in the form included in the authentication information, and
said authentication reception server is designed to reject authentication in case that it determines that information of the phone number is not included in the information from the phone device to which the external device is connected.

14. The authentication system as set forth in any one of claims 4-13, wherein said phone device is a portable phone device which can be communicated by radio.

15. The authentication system as set forth in any one of claims 4-8 and 10-13 wherein, instead of said phone device, a device with no calling function which is connected to said authentication reception server via transmission lines is used.
